# EUROPÄISCHE PATENTSCHRIFT

(11) **EP 1 180 270 B1**
(45) Veröffentlichungstag und Bekanntmachung des Hinweises auf die Patenterteilung: **14.04.2004**
(21) Anmeldenummer: 00941923.5
(22) Anmeldetag: 24.05.2000
(51) Int. Cl.: H04B 7/12, E05B 49/00, G07C 9/00

(54) **VERFAHREN UND VORRICHTUNG ZUR SIMPLEX-DATENÜBERTRAGUNG**
METHOD AND DEVICE FOR CARRYING OUT SIMPLEX DATA TRANSMISSION
PROCEDE ET DISPOSITIF POUR EFFECTUER DES TRANSMISSIONS DE DONNEES EN SIMPLEX

(30) Priorität: 26.05.1999 DE 19924017
(43) Veröffentlichungstag der Anmeldung: 20.02.2002
(73) Patentinhaber: SIEMENS AKTIENGESELLSCHAFT, 80333 München (DE)
(72) Erfinder: SCHNEIDER, Christian, D-93138 Lappersdorf (DE); REISINGER, Thomas, D-93051 Regensburg (DE)
(86) Internationale Anmeldenummer: PCT/DE2000/001660
(87) Internationale Veröffentlichungsnummer: WO 2000/074268

(56) Entgegenhaltungen:
- EP-A- 0 592 781
- WO-A-00/20712
- WO-A-00/70811
- DE-A- 4 440 855
- DE-A- 19 610 116
- US-A- 4 616 364
- US-A- 5 053 723

## Beschreibung

Die Erfindung betrifft ein Verfahren zur Simplex-Datenübertragung nach dem Oberbegriff des Anspruchs 1 sowie eine Vorrichtung zur Durchführung des Verfahrens.

Elektronische Zugangssteuersysteme haben in den letzten Jahren in verschiedenen Bereichen eine überraschend schnelle und weite Verbreitung gefunden. Die Funktionalität solcher Systeme wird ständig weiter ausgebaut, und gleichlaufend damit steigen die Ansprüche an die Störsicherheit der Übertragung. So haben sich im Automobilbau die klassischen Funkschließsysteme, die anfangs nur die Bedeutung einer (von vielen Autofahrern als überflüssig erachteten) Komfortfunktion hatten, inzwischen zu komplexen Systemen gewandelt, über die nicht nur der Zugang zum Fahrzeuginnenraum erreicht wird, sondern über die zudem Fahrzeugfunktionen gesteuert werden. Die Benutzerauthentifikation erfolgt dabei durch die Übermittlung eines Zugangscodes, und zwar bei modernen Systemen per Funk. Perspektivisch ist auch vorgesehen, neben dem Zugangscode benutzerspezifische Daten zu übertragen, die für die Steuerung bestimmter Funktionen benötigt werden. Auch unter Berücksichtigung eines somit ansteigenden Umfangs der entsprechenden Datentelegramme sowie der durch die Spezifikationen der Automobilhersteller gegebenen zeitlichen Limitierungen für den Gesamt-Übertragungsvorgang sind die Bitraten relativ niedrig, und es werden einfache Modulationsverfahren (etwa OOK = On-Off-Keying oder FSK = Frequency-Shift-Keying) sowie natürlich aus Kosten- und Platzgründen möglichst einfache Sender- und Empfänger-Strukturen verwendet.

Neben der Automobiltechnik bildet die Gebäudetechnik einen weiteren Einsatzschwerpunkt von Funk-Zugangssteuersystemen. Neben den seit längerem eingesetzten Garagentorsteuerungen gewinnen hierbei Zugangssteuersysteme in Betrieben und öffentlichen Gebäuden ein wachsendes Einsatzgebiet.

Ein grundsätzliches Problem bei der weiteren Verbreitung von Funk-Zugangssteuersystemen liegt darin, daß das Frequenzband, in dem diese Systeme arbeiten müssen (in Europa das ISM-Band von 433,05 bis 434,79 Mhz) nicht nur von der stark ansteigenden Anzahl solcher Systeme, sondern zudem auch durch Einbruchsmeldeanlagen, Telemetriestrecken, medizintechnische Geräte, Funkfernsteuerungen für Modellautos, Sprechfunkverbindungen und Kransteuerungen genutzt wird. In einzelnen Ländern sind auch weitere Nutzer zu beachten, so in Großbritannien Repeater-Stationen. In diesem Zusammenhang ist zu beachten, daß Funk-Zugangssteuersysteme im Hinblick auf die geringe benötigte Reichweite und im Interesse einer langen Batterielebensdauer mit sehr geringen Sendeleistungen im µW-Bereich arbeiten. Angesichts dieser Umstände kann es nicht verwundern, daß bei Funk-Zugangssteuersystemen zunehmend häufig Störungen, unter ungünstigen Umständen sogar Totalausfälle, auftreten.

Eine Möglichkeit zur Erhöhung der Zuverlässigkeit besteht im Vorsehen redundanter, auf andere Weise arbeitender Übertragungsstrecken, etwa einer Infrarotstrecke. Hierfür sind jedoch zusätzliche, auf völlig anderen Prinzipien basierende und daher in keiner Weise in das Hauptsystem zu integrierende Sender und Empfänger erforderlich, was zu einem Ansteigen des Kostenaufwandes und auch des Platzbedarfes führt. Auch die Nutzung aufwendigerer Codierungsverfahren, ebenso wie die Benutzung ausgesucht schmalbandiger Übertragungsstrecken führt in der Regel zu einer erheblichen Kostensteigerung. Die beispielsweise aus der Mobilfunktechnik bekannte Anwendung von Fehlerkorrekturmechanismen, die auf der künstlichen Hinzufügung von Redundanz zum Datentelegramm beruhen, um die Übertragungssicherheit zu erhöhen, erfordert ebenfalls einen relativ hohen Hard- und Softwareaufwand und daher für niedrigpreisige Funk-Zugangssteuersysteme - wie sie im Automobilbau gefordert werden - ebenfalls aus Kostengründen wenig geeignet.

Die ebenfalls bekannte Maßnahme einer mehrfachen Übertragung des Telegramms auf demselben Träger, die auf der Hoffnung beruht, daß eine Störung nicht während der gesamten Übertragungszeit vorhanden ist, führt in vielen Fällen nicht zum gewünschten Erfolg, insbesondere dann nicht, wenn das Zugangssteuersystem in der Umgebung eines kontinuierlich arbeitenden schmalbandigen Störers betrieben werden muß.

Bei einem bekannten Verfahren zur Simplex-Datenübertragung (DE 196 10 116 A1) wird ein Datentelegramm zwei verschiedenen Trägerfrequenzen aufmoduliert und in zwei verschiedenen Übertragungskanälen gleichzeitig ausgesendet. Im Empfänger werden die Datentelegramme aus beiden Übertragungskanälen zu einem einzigen Datentelegramm zusammengesetzt.

Bei einem nicht vorveröffentlichten, weiteren Verfahren zur Simplex-Datenübertragung (WO 00/20712 A1) wird ein Datentelegramm mehreren Trägerfrequenzen aufmoduliert und in mehreren Übertragungskanälen gleichzeitig oder zeitlich nacheinander ausgesendet. Im Empfänger wird derjenige Übertragungskanal und dessen Datentelegramm ausgewählt, in dem das geringste Rauschverhältnis vorhanden ist.

Der Erfindung liegt daher die Aufgabe zugrunde, ein verbessertes Verfahren der gattungsgemäßen Art sowie eine Vorrichtung zur Durchführung dieses Verfahrens anzugeben, mit denen eine deutliche Erhöhung der Zuverlässigkeit ohne wesentliche Kostensteigerung erreicht werden kann.

Diese Aufgabe wird hinsichtlich ihres Verfahrensaspektes durch ein Verfahren mit den Merkmalen des Anspruchs 1 und hinsichtlich des Vorrichtungsaspektes durch eine Vorrichtung mit den Merkmalen des Anspruchs 7 gelöst.

Die Erfindung schließt den wesentlichen Gedanken ein, eine mehrfache Übertragung eines zu übermittelnden Datentelegramms auf mindestens zwei unterschiedlichen Trägerfrequenzen vorzunehmen. Besonders effizient ist die Benutzung einer anderen Trägerfrequenz für jede der Übertragungen.

Die vorgeschlagene Maßnahme ist speziell bei den niedrigpreisigen Funk-Zugangssteuersystemen für Kraftfahrzeuge überraschend vorteilhaft, weil solche Systeme ohnehin kostengünstige Bauelemente mit hohen Toleranzen (beispielsweise Quarze und Oberflächenwellenfilter) nutzen und somit - nicht aus technischer Erwägung, sondern aus Kostengründen- relativ breitbandig ausgelegt sind. Kleine bewußte Veränderungen der Trägerfrequenz sind daher in solchen Systemen ohne nennenswerten Einfluß auf die Übertragungsparameter leicht möglich bzw. können beim Entwurf der Systeme ohne wesentliche Kostenfolgen leicht mit berücksichtigt werden.

Das vorgeschlagene Verfahren, das im folgenden kurz als "FORT(Frequency Offset Re-Transmission)"-Verfahren bezeichnet werden soll, erbringt bereits in seiner allgemeinsten Formulierung generell Vorteile, wenn der Empfänger eine Performance-Abhängigkeit von der Trägerfrequenz bzw. der Konstellation Trägerfrequenz-Störfrequenz zeigt, was sich bereits aus statistischen Überlegungen ergibt. Wenn nämlich das Vorhandensein eines Störers über die mögliche Übertragungsdauer hinweg anzunehmen ist, so hat dieser natürlich ein bestimmtes, mehr oder weniger breites Störfrequenzspektrum, und die Wahrscheinlichkeit einer Verringerung dieses Störeinflusses steigt mit Erhöhung der - durch mehrfache Übertragung bei unterschiedlichen Frequenzen erreichten - effektiven Erhöhung der Bandbreite der Nutzsignalübertragung an.

Low-Cost-Systeme müssen aufgrund der Toleranzen breitbandiger ausgelegt sein als eigentlich notwendig. Das heißt, daß der Empfänger in der Lage ist, nicht nur Signale auf der norminalen Trägerfrequenz verarbeiten zu können, sondern auch Signale mit leicht abweichenden Trägerfrequenzen (typisch: +/-300 ppm)(→ Empfängerbandbreite).

Die Veränderung der Trägerfrequenz hat nun nicht wie bei Mehrkanalsystemen zum Ziel, die (schmalbandigen) Störungen auszublenden, sondern die Wirkung der Störung auf den Empfänger zu verändern. Dies setzt voraus, daß die Receiver-Performance eine Abhängigkeit von der Konstellation Trägerfrequenz-Störfrequenz zeigt.

Eine solche Abhängigkeit kann bei verschiedenen Empfängerkonzepten oder -implementierungen verschieden stark ausgeprägt sein. Hat die Konstellation Trägerfrequenz-Störfrequenz innerhalb der zulässigen Empfängerbandbreite einen großen Einfluß auf die Performance - insbesondere wenn kleine Frequenzänderungen große Veränderungen hervorrufen - so ist das beschriebene Verfahren vorteilhaft einsetzbar. Ist dagegen kaum eine Abhängigkeit feststellbar, so bringt das beschriebene Verfahren keine Verbesserungen, ruft jedoch aber auch keine Nachteile hervor. Das heißt, das Verfahren läßt sich überall ohne nachteilige Wirkungen (abgesehen von einem minimal erhöhten Implementationsaufwand) einsetzen.

Die Verbesserung, die durch das beschriebene Verfahren erreicht wird, besteht dann in einer statistisch belegbaren höheren Rate erfolgreicher Telegramm-Übertragungen.

Besonders vorteilhaft ist das vorgeschlagene Verfahren in Bezug auf schmalbandige Störungen in Verbindung mit der Anwendung einer Spreizspektrum-Technik, insbesondere einer DSSS(Direct Sequence Spread Spectrum)-Übertragung.

Aus Simulationsrechnungen und allgemeinen Systembetrachtungen läßt sich herleiten, daß eine Frequenzabweichung zwischen den verschiedenen im Rahmen einer Mehrfachübertragung benutzten Trägerfrequenzen in der Größenordnung der Datenrate, insbesondere im Bereich eines Viertels bis hin zum Zweifachen der Datenrate, als zweckmäßig anzusehen ist. Derartige Differenzen werden von den in Rede stehenden Systemen ohne nennenswerte Parameteränderungen verkraftet und reichen für eine Vielzahl typischer Störsituationen aus.

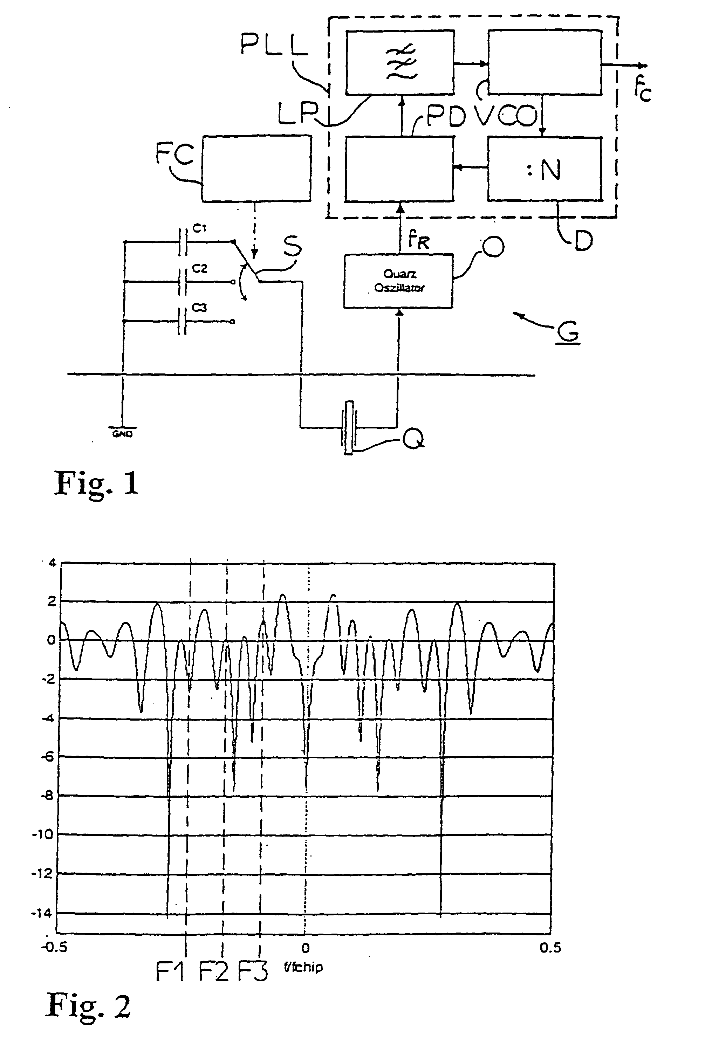

In Fig. 2 ist eine spezielle Übertragungsfunktion einer Spreizsequenz bildlich dargestellt. Wie sich aus dem Vorhandensein ausgeprägter Maxima und Minima in dieser Kurve ohne weiteres ergibt, wirkt diese Übertragungsfunktion auf schmalbandige Störer wie ein Filter, das den Störer entweder abschwächt (Minimum) oder im ungünstigen Fall verstärkt (Maximum). Der mit der DSSS-Übertragung grundsätzlich erzielbare Gewinn wird also, je nach Lage des Störers, entweder vergrößert oder verringert, was sich natürlich direkt auf das Signal-/Rausch-Verhältnis und damit die Bitfehlerrate auswirkt.

Wird nun bei jeder neuen Übertragung eines Datentelegramms die Sendefrequenz leicht verändert, so stellt sich auch die empfängerseitige Trägerfrequenzregelung/Synchronisationsschaltung bei der Umsetzung des Empfangssignals ins Basisband auf diese veränderte Frequenz ein. Da aber das Störsignal - entsprechend praxisgerechter Annahme - seine Frequenz nicht ändert, wird es bei jeder neuen Übertragung durch die Umsetzung ins Basisband auf eine andere Frequenz "abgebil-det". Weil die Übertragungsfunktion der Spreizsequenz erst nach erfolgter Synchronisation im Basisband zur Wirkung gelangt, ergibt sich für jede Übertragung ein anderes Signal-/Rausch-- Verhältnis. Wiederum aus statistischen Überlegungen ergibt sich dann, daß bei mehreren Übertragungen mindestens eine erfolgt ist, bei der ein höheres Signal-/Rausch-Verhältnis als bei der ersten Übertragung - und damit bei einer konventionellen Übertragung ohne Trägerfrequenzverstimmung - erzielt wurde.

Hieraus ergibt sich, daß bei einer zusätzlichen Rückmeldefunktion des Empfängers die Übertragung solange mit unterschiedlichen Trägerfrequenzen durchgeführt werden kann, bis empfängerseitig ein Datentelegramm bitfehlerfrei aufgenommen wurde. Die mehrfache Übertragung könnte dann abgebrochen werden, was zu einer Verkürzung der Reaktionszeit des Zugangssteuersystems beitragen kann, die (wie oben bereits erwähnt) einer der für den praktischen Einsatz kritischsten Parameter ist. (Bei einer Simplex-Übertragung kann nicht festgestellt werden, ob ein Telegramm fehlerfrei empfangen wurde.)

In einer weiteren Ausführungsvariante, die in Abhängigkeit vom konkreten Verhalten einer eingesetzten Synchronisationsschaltung zum Tragen kommen kann, wird nach Erlangung der Synchronisation durch eine zusätzliche, kontrollierte und ohne Synchronisationsverlust ablaufende Frequenzverstimmung eine Verbesserung der Effektivität des Verfahrens für den Fall erreicht werden, daß Synchronisations-Performance und Bitfehler-Performance (bedingt durch die spezifische Übertragungsfunktion der Spreizsequenz) kompensierende Wirkung haben sollten.

Der Betrag der Trägerfrequenzänderung muß nicht sehr genau bestimmt sein, da deren Effekt (wie oben erläutert) sich statistisch begründet. Toleranzen im Bereich von ± 10 % sind ohne weiteres als zulässig anzusehen und bedeuten für die Realisierung in Low-Cost-Systemen einen erheblichen Vorteil.

Die Realisierung der unterschiedlichen Trägerfrequenzen erfolgt durch die Zuschaltung mindestens eines Kondensators, bevorzugt mehrerer Kondensatoren unterschiedlicher Kapazität und/oder in verschiedenen Zusammenschaltungen, zu einem Schwingquarz des Trägerfrquenzgenerators, der durch den Kondensator bzw. die Kondensatoren gezielt verstimmt wird.

Vorteile und Zweckmäßigkeiten der Erfindung ergeben sich im übrigen aus den Unteransprüchen sowie der nachfolgenden Beschreibung eines Ausführungsbeispiels und den anschließenden Erläuterungen von Meß- und Simulationsergebnissen. Von den Figuren zeigen:
- Fig. 1: eine Prinzipskizze einer Vorrichtung zur Durchführung des erfindungsgemäßen Verfahrens in einer Ausführungsform,
- Fig. 2: eine spezifische Übertragungsfunktion einer DSSS-Übertragung und
- Fig. 3 bis 6: Simulationsergebnisse zur Verdeutlichung der Erhöhung der Übertragungsqualität der Anwendung des erfindungsgemäßen Verfahrens ("FORT") an Beispielen.

Fig. 1 zeigt in einer Prinzipskizze eine einfache Ausführung eines verstimmbaren Trägerfrequenzgenerators G, in dem ein konventioneller Schwingquarz Q wahlweise über einen von drei Kondensatoren C1, C2, C3 mit unterschiedlicher Kapazität mit Masse (GND) verbunden ist und die Schwingungsfrequenz der Oszillatorschaltung O durch den jeweils zugeschalteten Kondensator beeinflußt wird. Die Oszillatorschaltung O liefert eine Referenzfrequenz f_{R} für eine PLL-Schaltung PLL, die - in an sich bekannter Weise - einen Phasendiskriminator PD, einen Tiefpaß LP, einen spannungsgesteuerten Oszillator VCO und einen :N-Teiler D in der üblichen und in Fig. 1 skizzierten Verschaltung aufweist und an deren Ausgang die Trägerfrequenz f_{C} als N-faches der Referenzfrequenz f_{R} bereitgestellt wird. Die Zuschaltung der Kondensatoren C1, C2 und C3 erfolgt durch eine Trägerfrequenzsteuereinheit FC gemäß einem vorgegebenen (beispielsweise in einem internen Programmspeicher der Frequenzsteuereinheit abgelegten) Ablauf. Die Kapazitäten der Kondensatoren sind derart gewählt, daß die Verstimmung des (ansonsten konventionell aufgebauten) Oszillators O so erfolgt, daß die resultierende Änderung der Trägerfrequenz in der Größenordnung der Datenrate liegt. Der zeitliche Ablauf der Trägerfrequenzvariation ist limitiert einerseits durch den Umfang des Datentelegramms und die Übertragungsrate und andererseits durch die geforderte Ansprechzeit des Systems, so daß für jeden Übertragungsvorgang (nach derzeitigem Erkenntnisstand) typischerweise einige zehn Millisekunden benötigt werden und eine Anzahl zwischen zwei und etwa zehn Übertragungen möglich ist.

Fig. 2 ist eine Darstellung einer Übertragungsfunktion einer zur DSSS-Übertragung gemäß einer Fortbildung des Verfahrens benutzten Spreizsequenz. Auf der Abszisse ist das Verhältnis f/fchip und auf der Ordinate der Übertragungsgewinn aufgetragen. Wie oben bereits erwähnt, zeigt die Übertragungsfunktion, daß das vorgeschlagene Verfahren in Verbindung mit der Anwendung einer DS-Spreizspektrumtechnik aus statistischen Gründen einen Gewinn an Übertragungsqualität erbringt. Zur Verdeutlichung dessen sind in die graphische Darstellung drei willkürlich gewählte Trägerfrequenzen F1, F2 und F3 eingezeichnet. Diesen entsprechen Gewinn-Werte von etwa -2 dB, 0 bzw. +1 dB. Für eine beliebige Ausgangs-Trägerfrequenz (hier beispielsweise F2) besteht mithin eine mit der Anzahl der Variationsschritte ansteigende Wahrscheinlichkeit dafür, mit mindestens einem Variationsschritt ein günstigeres Signal/Rausch-Verhältnis bezüglich eines schmalbandigen Störers zu erreichen als am Ausgangspunkt.

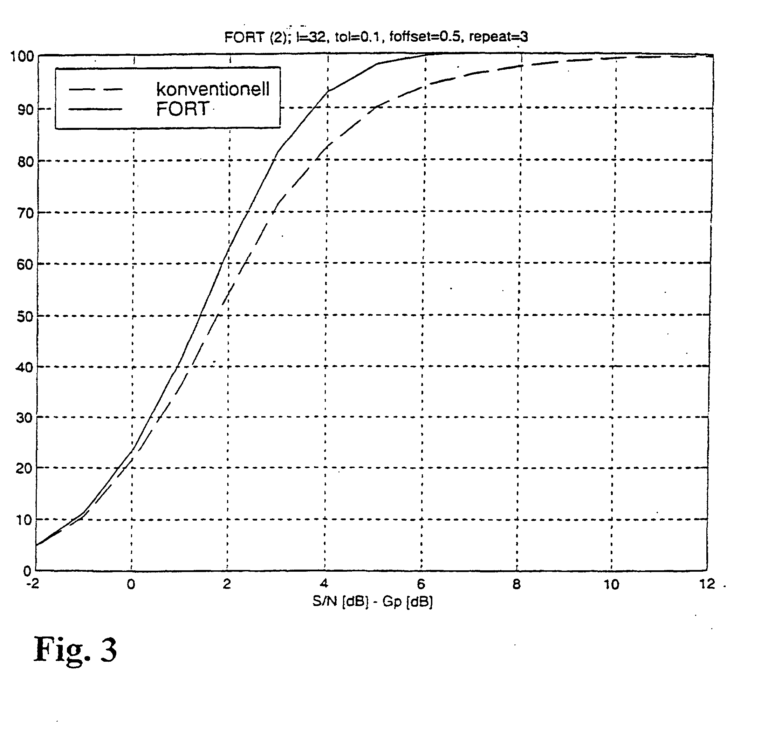

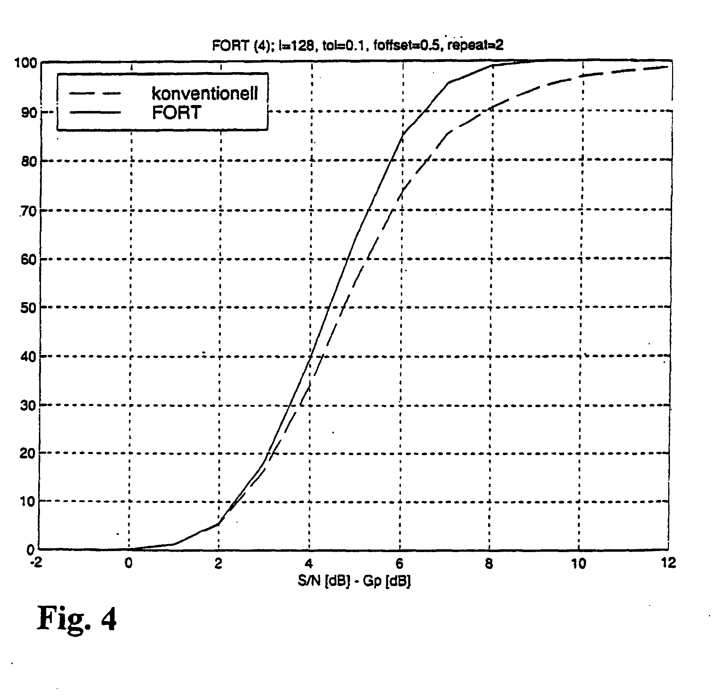

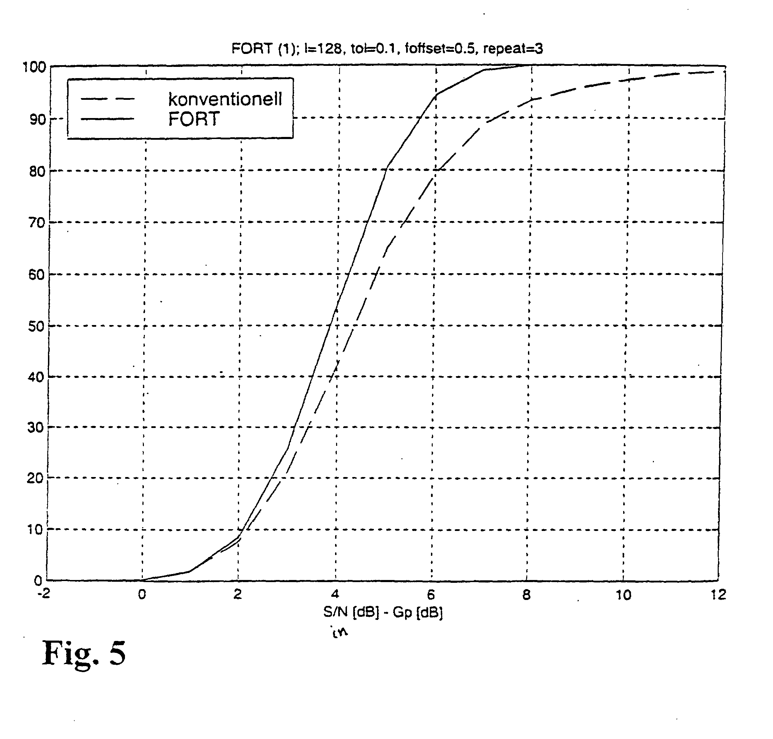

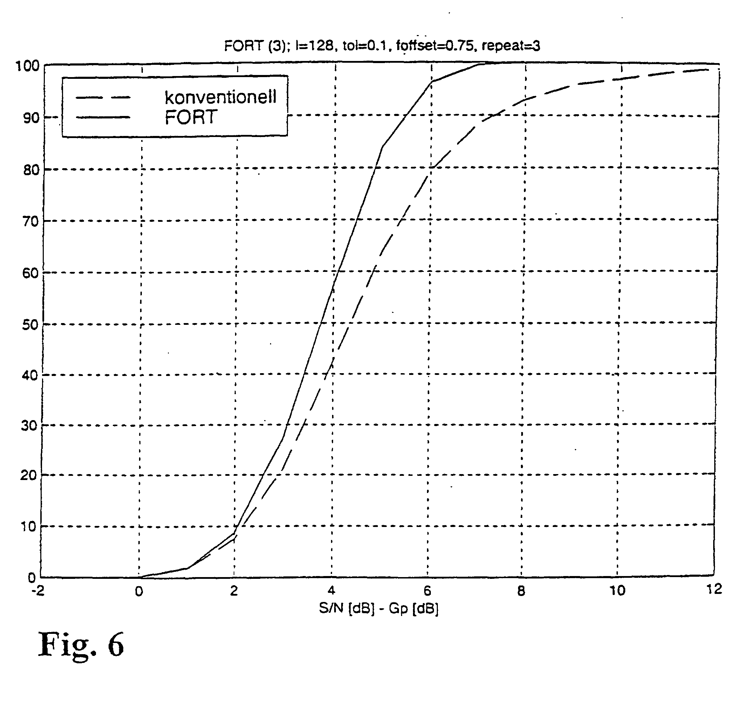

In den Figuren 3 bis 6 sind Simulationsergebnisse zum Vergleich einer konventionellen Datentelegrammübertragung auf konstanter Trägerfrequenz mit einer Übertragung bei variierter Trägerfrequenz ("FORT") gegenübergestellt. Auf der Abszisse ist jeweils die Differenz aus dem Eingangs-Signal-/Rausch-Verhältnis S/N und dem durch den Einsatz der Spreizspektrumtechnik bedingten Prozeßgewinn Gp (bei Spreizfaktor 31 etwa 15 dB) aufgetragen und auf der Ordinate die Wahrscheinlichkeit einer erfolgreichen Übertragung in Prozent.

Folgende Annahmen wurden zur Ermittlung der Ergebnisse getroffen:
- Es liegt eine sehr schmalbandige Störung zufälliger Frequenz vor.
- Die Synchronisation hat keinen Einfluß auf die Performance.
- Das Eingangs-S/N-Verhältnis (S/N) wird durch den Wert der Spreizsequenz-Übertragungsfunktion bei der (auf das Basisband abgebildeten) Störfrequenz verändert. Für die Simulation bedeutet dies, daß bei jedem Durchlauf ein beliebiger Wert der Übertragungsfunktion gewählt wurde.
- Die Bitfehlerrate ergibt sich aus der Bitfehlerkurve für PSK(Phase Shift Keying) über AWGN-Kanal.
- Die Änderung der Trägerfrequenz bei FORT unterliegt einer gewissen Zufälligkeit infolge von Toleranzen der Bauteile.
- Ein Übertragungsversuch gilt als erfolgreich, wenn in mindestens einem Telegramm kein Bitfehler enthalten war.

Folgende Parameter der FORT-Übertragung wurden gewählt bzw. variiert:
- Telegrammlänge "I" (Anzahl der Bits): 128 und 32
- Frequenzänderung "foffset", bezogen auf Datenrate (Datenrate = 1/31 *Chipfrequenz fchip): 0.5*Datenrate und 0.75*Datenrate
- Toleranz der Frequenzänderung "tol": 10 % (→ z.B. foffset = 0.45 ... 0.55*Datenrate)
- Anzahl der Telegrammwiederholung "repeat": 2 und 3

Es zeigt sich, daß besonders im Bereich hoher Zuverlässigkei (erfolgreiche Übertragungsversuche > 95 %) der Einsatz der FORT-Methode Vorteile bringt. Der Gewinn im Eingangs-S/N-Verhältnis beträgt hier 2 dB und mehr.

## Patentansprüche

1. Verfahren zur Simplex-Datenübertragung eines einer Trägerfrequenz aufmodulierten Datentelegramms zur Simplex-Funkübertragung in einem Funk-Zugangssteuersystem, bei dem das Datentelegramm, das jeweils einen Zugangscode enthält, zur Erhöhung der Störsicherheit mehrfach übertragen wird, **dadurch gekennzeichnet, daß** die Mehrfachübertragung bei mindestens zwei unterschiedlichen Trägerfrequenzen zeitlich nacheinander ausgeführt wird, wobei die Trägerfrequenzen durch verstimmen eines über mindestens einen Kondensator verstimmbaren Schwingquarzes eines Trägenfrequenz generators nur derart verändert werden, daß sie innerhalb eines einzigen Übertragungskanals liegen.

2. Verfahren nach Anspruch 1, **dadurch gekennzeichnet, daß** für jede von mehr als zwei Übertragungen eine andere Trägerfrequenz benutzt wird.

3. Verfahren nach einem der vorangehenden Ansprüche, **dadurch gekennzeichnet, daß** das Datentelegramm eine Spreizung mittels einer vorgegebenen Spreizsequenz, insbesondere mittels des DSSS-Verfahrens, aufgeprägt erhält.

4. Verfahren nach Anspruch 3, **dadurch gekennzeichnet, daß** die unterschiedlichen Trägerfrequenzen eine Frequenzdifferenz in der Größenordnung der Datenrate des Datentelegramms, insbesondere im Bereich eines Viertels bis zum Zweifachen der Datenrate aufweisen.

5. Verfahren nach einem der vorangehenden Ansprüche, **dadurch gekennzeichnet, daß** die Einstellung der unterschiedlichen Trägerfrequenzen innerhalb eines Toleranzbereiches von mindestens ± 10 % erfolgt.

6. Vorrichtung zur Durchführung des Verfahrens nach einem der vorangehenden Ansprüche, **gekennzeichnet durch**
- einen Trägerfrequenzgenerator (G), der einen über mindestens einen Kondensator (C1, C2, C3) verstimmbaren Schwing-quarz (Q) aufweist, wodurch unterschiedliche Trägerfrequenzen erzeugt werden, die jeweils innerhalb des Frequenzbereichs eines Übertragungskanals liegen, und **durch**
- einen Sender, mit dem Datentelegramme, die jeweils einen Zugangscode enthalten, mit den Trägerfrequenzen moduliert und zeitlich aufeinanderfolgend in dem Übertragungskanal mehrfach ausgesendet werden.

7. Vorrichtung nach Anspruch 6, **dadurch gekennzeichnet, daß** der Trägerfrequenzgenerator (G) mehrere Kondensatoren (C1, C2, C3) sowie einen Schalter (S) aufweist, welcher, insbesondere programmgesteuert, zur Erzeugung unterschiedlicher Trägerfrequenzen einer Mehrfachübertragung jeweils einen oder mehrere der Kondensatoren dem Schwingquarz (Q) zuschaltet.

8. Vorrichtung nach Anspruch 6 oder 7, **gekennzeichnet durch** eine Trägerfrequenzsteuereinrichtung (FC) zur Einstellung der unterschiedlichen Trägerfrequenzen bei einer Mehrfachübertragung.

## Claims

1. Method for carrying out simplex transmission of a data message modulated onto a carrier frequency for simplex radio transmission in a radio access control system, in which the data message, which in each case contains an access code, is transmitted several times to increase immunity to interference, **characterized in that** the multiple transmission is carried out using at least two different carrier frequencies in temporal succession, whereby the carrier frequencies are changed, by detuning an oscillator crystal of a carrier frequency generator, which oscillator crystal can be detuned via at least one capacitor, only in such a way that they occur within one single transmission channel.

2. Method according to Claim 1, **characterized in that** a different carrier frequency is used for each of more than two transmissions.

3. Method according to one of the preceding claims, **characterized in that** spreading is applied to the data message by means of a predefined spread sequence, in particular by means of the DSSS method.

4. Method according to Claim 3, **characterized in that** the different carrier frequencies show a frequency difference in the order of magnitude of the data rate of the data message, in particular in the range of one quarter to two times the data rate.

5. Method according to one of the preceding claims, **characterized in that** the different carrier frequencies are set within a tolerance range of at least ± 10%.

6. Device to carry out Method according to one of the preceding claims, **characterized by**
- a carrier frequency generator (G) which has an oscillator crystal (Q) which can be detuned via at least one capacitor (C1, C2, C3), whereby different carrier frequencies are generated, which in each case lie within the frequency range of a transmission channel, and by
- a transmitter with which data messages, which in each case contain an access code, are modulated with the carrier frequencies and repeatedly transmitted in temporal succession in the transmission channel.

7. Device according to Claim 6, **characterized in that** the carrier frequency generator (G) has a plurality of capacitors (C1, C2, C3) and a switch (S) which, in particular program-controlled, in each case connects one or more of the capacitors to the oscillator crystal (Q) to generate different carrier frequencies.

8. Device according to Claim 6 or 7, **characterized by** carrier frequency control device (FC) for setting the different carrier frequencies in the case of multiple transmission.

## Revendications

1. Procédé de transmission unidirectionnelle de données d'un télégramme de données modulé sur une fréquence porteuse, pour la transmission unidirectionnelle radio dans un système de commande d'accès radio, dans lequel le télégramme de données, qui contient à chaque fois un code d'accès, est transmis à plusieurs reprises pour améliorer la sécurité vis-à-vis des parasites, **caractérisé en ce que** la transmission multiple est exécutée à plusieurs reprises successivement dans le temps à au moins deux fréquences porteuses différentes, les fréquences porteuses étant seulement modifiées par le désaccord d'un quartz oscillant appartenant à un générateur de fréquences porteuses, pouvant être désaccordé au moyen d'au moins un condensateur que d'une façon telle qu'elles se trouvent dans les limites d'un même canal de transmission.

2. Procédé selon la revendication 1, **caractérisé en ce qu'**on utilise une fréquence porteuse différente pour chacune de plus de deux transmissions.

3. Procédé selon une des revendications précédentes, **caractérisé en ce que** le télégramme de données reçoit une dispersion qui lui est imprimée au moyen d'une séquence de dispersion prédéterminée, en particulier au moyen du procédé DSSS.

4. Procédé selon la revendication 3, **caractérisé en ce que** les différentes fréquences porteuses présentent une différence de fréquence de l'ordre de grandeur de la cadence de données du télégramme de données, en particulier dans la zone d'un quart à deux fois la cadence de données.

5. Procédé selon une des revendications précédentes, **caractérisé en ce que** le réglage des différentes fréquences porteuses s'effectue dans les limites d'un intervalle de tolérances d'au moins ± 10 %.

6. Dispositif pour la mise en oeuvre du procédé selon une des revendications
précédentes, **caractérisé par**
- un générateur de fréquences porteuses (G), qui présente un quartz oscillant (Q) pouvant être désaccordé à l'aide d'au moins un condensateur (C1, C2, C3), de façon à produire différentes fréquences porteuses qui se trouvent à chaque fois dans la gamme de fréquences d'un canal de transmission, et par
- un émetteur avec lequel sont émis plusieurs fois des télégrammes de données qui contiennent chacun un code d'accès, avec les fréquences porteuses modulées et successivement dans le temps dans le canal de transmission.

7. Dispositif selon la revendication 6, **caractérisé en ce que** le générateur de
fréquences porteuses (G) présente plusieurs condensateurs (C1, C2, C3) ainsi qu'un commutateur (S) qui met en circuit à chaque fois avec le quartz oscillant (Q) un ou plusieurs des condensateurs pour produire des fréquences porteuses différentes d'une transmission multiple.

8. Dispositif selon la revendication 6 ou 7, **caractérisé par** un dispositif de
commande de fréquences porteuses (FC) destiné à régler les différentes fréquences porteuses dans le cas d'une transmission multiple.
